(19) Europäisches Patentamt European Patent Office Office européen des brevets

(11) **EP 4 779 659 A1**

(12) **EUROPEAN PATENT APPLICATION**
published in accordance with Art. 153(4) EPC

(43) Date of publication:
**22.07.2026 Bulletin 2026/30**

(21) Application number: **24865510.2**

(22) Date of filing: **12.09.2024**

(51) International Patent Classification (IPC):
*H01F 1/11* (2006.01)      *C01B 33/12* (2006.01)
*C01G 49/00* (2006.01)     *C01G 49/08* (2006.01)
*C09C 1/24* (2006.01)      *G03G 9/08* (2006.01)
*G03G 9/083* (2006.01)     *G03G 9/107* (2006.01)

(52) Cooperative Patent Classification (CPC):
**C01B 33/12; C01G 49/00; C01G 49/08; C09C 1/22;
C09C 1/24; C09C 3/06; C09D 11/037; G03G 9/08;
G03G 9/083; G03G 9/107; H01F 1/11; H01F 1/14;
H01F 1/36; H01F 1/44**

(86) International application number:
**PCT/JP2024/032669**

(87) International publication number:
**WO 2025/058010 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.09.2023 JP 2023149534**

(71) Applicant: **Nittetsu Mining CO., LTD.**
**Tokyo 100-8377 (JP)**

(72) Inventors:
• **ARAI Tsubasa**
**Nishitama-gun, Tokyo 190-0182 (JP)**
• **KISHIMOTO Akira**
**Nishitama-gun, Tokyo 190-0182 (JP)**

(74) Representative: **Potter Clarkson**
**Chapel Quarter**
**Mount Street**
**Nottingham NG1 6HQ (GB)**

(54) **COMPOSITE PARTICLES OF SEED PARTICLES AND COBALT FERRITE PARTICLES, AND METHOD FOR MANUFACTURING SAME**

(57)      Provided are a production method capable of synthesizing composite particles of seed particles and cobalt ferrite particles with lower energy, the composite particles having a particle diameter within a specific range, a rounded shape with a predetermined average circularity, and specific magnetic properties; and composite particles of seed particles and cobalt ferrite particles produced by this method, the composite particles having a rounded shape with a predetermined average circularity, specific magnetic properties, and a uniform particle diameter. A method for producing composite particles of seed particles and cobalt ferrite particles is provided, the method including the steps of: preparing a ferrite precursor in an aqueous solution with a divalent iron salt and a cobalt salt stabilized by a complexing agent; adding spherical or approximately spherical seed particles to the ferrite precursor; and further performing a thermal treatment on the ferrite precursor.

[FIG. 1]

FIG. 1A

0.8kV-D 2.0mm x2.00k SE(U)      20.0um

FIG. 1B

0.8kV-D 2.0mm x20.0k SE(U)                                    2.00um

**Description**

TECHNICAL FIELD

The present invention relates to composite particles of seed particles and cobalt ferrite particles and a method for producing the same. The present invention provides composite particles of seed particles and cobalt ferrite particles, the composite particles having a particle diameter within a specific range, a rounded shape with a predetermined average circularity, and specific magnetic properties.

BACKGROUND ART

Ferrite particles are known as highly permeable materials or permanent magnet materials. Nowadays, magnetic powder is used in new materials, such as copier toners, magnetic inks, and MR fluids, and there is an expectation of improvement in quality or performance thereof.

Of spinel ferrite, cobalt ferrite is particularly known as a magnetic material having a large crystal magnetic anisotropy and a large coercivity. In addition, cobalt is similar to iron in chemical behaviors and thus has an advantage of ease of a variety of controls in the producing process thereof.

As a method for producing ferrite particles, methods such as a co-precipitation method, a wet oxidation method, and a hydrothermal method are known.

The co-precipitation method is a reaction in which two or more kinds of ions are precipitated at the same time. In the case of producing cobalt ferrite particles by the co-precipitation method, an alkali is introduced into an aqueous solution including $Fe^{3+}$ and $Co^{2+}$ ions, and then the resulting solution is heated to facilitate the reaction to thereby obtain nanosized ferrite particles. In this method, the reaction is performed at a temperature of 80°C to 100°C, an average particle diameter of the obtained particles is about 20 to 50 nm, and only the particles having a relatively wide particle size distribution can be obtained (Patent Document 1).

The wet oxidation method is a method in which an oxidant such as air is reacted with a raw material aqueous solution including $Fe^{2+}$ and $Co^{2+}$ ions while being heated. In the case of using air as the oxidant, a reaction temperature is about 60 to 100°C, and particles having a size of about 0.05 to 0.3 $\mu$m are obtained (Patent Documents 2 and 3). Furthermore, in a method in which a reaction between a raw material aqueous solution and an oxidant liquid is continuously performed, the reaction is performed at a temperature of 30°C to 100°C, and ferrite particles having a size of 3 to 20 nm are obtained (Patent Document 4).

The hydrothermal method is a method in which an aqueous solution including $Co^{2+}$ ions is mixed with an aqueous solution including $Fe^{2+}$ ions and hydrothermal synthesis is carried out in an autoclave, and ferrite particles having relatively large particle diameters of 0.3 to 8 $\mu$m are produced by a reaction performed at a high temperature of 160°C to 300°C (Patent Document 5).

In the case of producing ferrite particles by the conventional techniques, ferrite particles can be produced at relatively low temperature by the co-precipitation method or the wet oxidation method, but only nanometer-order fine particles are obtained. Furthermore, the hydrothermal method can yield relatively large micrometer-order particles, but a hydrothermal reaction (Schikorr reaction) should be carried out at high temperature and high pressure, which has equipment and cost problems.

CITATION LIST

PATENT LITERATURE

Patent Document 1: Japanese Patent No. 4138344
Patent Document 2: Japanese Examined Patent Publication No. H03-24412
Patent Document 3: Japanese Examined Patent Publication No. S60-47722
Patent Document 4: Japanese Patent No. 5504399
Patent Document 5: Japanese Unexamined Patent Application Publication No. H05-275224

SUMMARY OF INVENTION

TECHNICAL PROBLEM

In conventional production of cobalt ferrite particles, reducing a particle diameter results in loss of roundness and a distorted shape. When cobalt ferrite particles for use in copier toners, magnetic inks, and MR fluids have rounded surfaces, it is possible to uniformly coat the particle surface with a minimum necessary amount of a surface treatment agent. However, the distorted surfaces of the particles lead to the increased usage of the surface treatment agent, and an extra cost is required.

Considered as one parameter for evaluating a degree of roundness of the particle surface is an average circularity of the particles. Therefore, cobalt ferrite particles or composite particles including cobalt ferrite have been demanded, which can be uniformly coated with a minimum necessary amount of a surface treatment agent due to their predetermined average circularity and rounded particle surfaces.

Accordingly, the present invention provides a production method capable of overcoming the problems with the conventional techniques and synthesizing composite particles of seed particles and cobalt ferrite particles with lower energy, the composite particles having a particle diameter within a specific range, a rounded shape with a predetermined average circularity, and specific magnetic properties. Additionally, the present invention provides composite particles of seed particles and cobalt ferrite particles produced by the above production method, the composite particles having a particle diameter within a specific range, a rounded shape with a predetermined average circularity, and specific magnetic properties.

SOLUTION TO PROBLEM

As a means for solving the above-described problems, the present invention employs the means including the following configurations.

(1) A method for producing composite particles of seed particles and cobalt ferrite particles, including the steps of: preparing a ferrite precursor in an aqueous solution with a divalent iron salt and a cobalt salt stabilized by a complexing agent; adding spherical or approximately spherical seed particles to the ferrite precursor; and further performing a thermal treatment on the ferrite precursor.

(2) The method for producing composite particles of seed particles and cobalt ferrite particles according to (1), wherein the thermal treatment is a hydrothermal treatment performed in a pressure vessel within a temperature range of 130°C to 260°C.

(3) The method for producing composite particles of seed particles and cobalt ferrite particles according to (2), wherein the thermal treatment is a hydrothermal treatment performed in a pressure vessel within a temperature range of 190°C to 240°C.

(4) The method for producing composite particles of seed particles and cobalt ferrite particles according to (2) or (3), wherein a duration of the step of performing the thermal treatment is 1 to 50 hours.

(5) The method for producing composite particles of seed particles and cobalt ferrite particles according to (3), wherein the thermal treatment is a hydrothermal treatment performed by: heating to a temperature range of 190°C to 210°C and maintaining a first achieving temperature thereof; and further heating to a temperature range of 210°C to 240°C and maintaining a second achieving temperature thereof.

(6) The method for producing composite particles of seed particles and cobalt ferrite particles according to any one of (1) to (5), wherein the first achieving temperature is maintained for 1 to 14 hours.

(7) The method for producing composite particles of seed particles and cobalt ferrite particles according to any one of (1) to (6), wherein the second achieving temperature is maintained for 0.5 to 12 hours.

(8) The method for producing composite particles of seed particles and cobalt ferrite particles according to any one of (1) to (7), wherein, as the seed particles, at least one selected from iron, iron alloy, iron oxide, spinel ferrite, or silica is used.

(9) The method for producing composite particles of seed particles and cobalt ferrite particles according to any one of (1) to (8), wherein the divalent iron salt and the cobalt salt are respectively iron(II) sulfate and cobalt(II) sulfate.

(10) The method for producing composite particles of seed particles and cobalt ferrite particles according to any one of (1) to (8), wherein the divalent iron salt and the cobalt salt are respectively iron(II) chloride and cobalt(II) chloride.

(11) The method for producing composite particles of seed particles and cobalt ferrite particles according to any one of (1) to (10), wherein, as the complexing agent, one selected from citrate, nitrilotriacetate, or malate is used.

(12) The method for producing composite particles of seed particles and cobalt ferrite particles according to any one of (1) to (11), wherein the step of performing the thermal treatment is carried out in the presence of an oxidant in addition to the complexing agent.

(13) The method for producing composite particles of seed particles and cobalt ferrite particles according to (12), wherein the oxidant is nitrate.

(14) The method for producing composite particles of seed particles and cobalt ferrite particles according to any one of (1) to (13), wherein a trivalent iron salt is further added to the aqueous solution including the ferrite precursor.

(15) The method for producing composite particles of seed particles and cobalt ferrite particles according to any one of (1) to (14), wherein a pH buffer is further added to the aqueous solution including the ferrite precursor.

(16) The method for producing composite particles of seed particles and cobalt ferrite particles according to any one of (1) to (15), wherein an alkaline aqueous solution or the ferrite precursor is press-injected into the pressure vessel in the middle or after completion of the step of performing the thermal treatment, and the thermal treatment is further performed.

(17) Composite particles of seed particles and cobalt ferrite particles, wherein the composite particles have a rounded shape with an average circularity of 0.7 to 1.0, a particle diameter corresponding to a cumulative value of 50% based on a particle diameter distribution is 1 to 30 $\mu$m, and a particle diameter corresponding to a cumulative value of 95% based on a particle diameter distribution is 5 to 50 $\mu$m.

(18) The composite particles of seed particles and cobalt ferrite particles according to (17), wherein a residual magnetic moment is equal to or more than 10 emu/g and a coercivity is 100 to 1000 Oe.

(19) A copier toner including the composite particles of seed particles and cobalt ferrite particles according to (18).

(20) A magnetic ink including the composite particles of seed particles and cobalt ferrite particles according to (18).

(21) An MR fluid including the composite particles of seed particles and cobalt ferrite particles according to (18).

(22) White powder including a titanium oxide film and a metallic silver film in this order on surfaces of the composite particles of seed particles and cobalt ferrite particles according to (18).

(23) The white powder according to (22), wherein a lightness L* is equal to or higher than 75.

## ADVANTAGEOUS EFFECTS OF INVENTION

By employing the production method of the present invention, it becomes possible to produce magnetic particles including composite particles of seed particles and cobalt ferrite particles with lower energy as compared with magnetic particles produced by conventional methods, the composite particles having a particle diameter within a specific range, a rounded shape with a predetermined average circularity, and specific magnetic properties.

The composite particles of seed particles and cobalt ferrite particles obtained by the production method of the present invention have a rounded shape and are uniform in particle diameter, and thus are expected to be used as copier toners, magnetic inks, and MR fluids. Furthermore, the composite particles of seed particles and cobalt ferrite particles of the present invention can be whitened by a known method or further provided with a colored layer, and thereby made into white powder with a high lightness or brightly colored color powder.

## BRIEF DESCRIPTION OF DRAWINGS

[FIG. 1] FIG. 1A is an SEM photograph of composite particles of Example 1. FIG. 1B is an SEM photograph of iron (Fe) used as seed particles in Example 1.

[FIG. 2] FIG. 2A is an SEM photograph of composite particles of Example 2. FIG. 2B is an SEM photograph of iron (Fe) used as seed particles in Example 2.

[FIG. 3] FIG. 3A is an SEM photograph of composite particles of Example 3. FIG. 3B is an SEM photograph of iron (Fe) used as seed particles in Example 3.

[FIG. 4] FIG. 4A is an SEM photograph of composite particles of Example 4. FIG. 4B is an SEM photograph of iron (Fe) used as seed particles in Example 4.

[FIG. 5] FIG. 5A is an SEM photograph of composite particles of Example 5. FIG. 5B is an SEM photograph of iron (Fe) used as seed particles in Example 5.

[FIG. 6] FIG. 6A is an SEM photograph of composite particles of Example 6. FIG. 6B is an SEM photograph of zinc ferrite, which is one type of spinel ferrite, used as seed particles in Example 6.

[FIG. 7] FIG. 7A is an SEM photograph of composite particles of Example 7. FIG. 7B is an SEM photograph of alnico, which is one type of iron alloy, used as seed particles in Example 7.

[FIG. 8] FIG. 8A is an SEM photograph of composite particles of Example 8. FIG. 8B is an SEM photograph of magnetite, which is one type of iron oxide, used as seed particles in Example 8.

[FIG. 9] FIG. 9A is an SEM photograph of composite particles of Example 9. FIG. 9B is an SEM photograph of silica used as seed particles in Example 9.

[FIG. 10] FIG. 10A is an SEM photograph of composite particles of Example 10. FIG. 10B is an SEM photograph of iron (Fe) used as seed particles in Example 10.

[FIG. 11] FIG. 11A is an SEM photograph of composite particles of Reference Example 1. FIG. 11B is an SEM photograph of iron (Fe) used as seed particles in Reference Example 1.

[FIG. 12] FIG. 12A is an SEM photograph of composite particles of Reference Example 2. FIG. 12B is an SEM photograph of iron (Fe) used as seed particles in Reference Example 2.

[FIG. 13] FIG. 13A is an SEM photograph of composite particles of Comparative Example 1. FIG. 13B is an SEM photograph of non-spherical magnetite used as seed particles in Comparative Example 1.

[FIG. 14] FIG. 14A is an SEM photograph of composite particles of Comparative Example 2. FIG. 14B is an SEM photograph of non-spherical magnetite used as seed particles in Comparative Example 2.

[FIG. 15] FIG. 15A is an SEM photograph of composite particles of Comparative Example 3. Impurities are shown inside white frames in FIG. 15A. FIG. 15B is an SEM photograph of iron (Fe) used as seed particles in Comparative Example 3.

[FIG. 16] FIGs. 16A and 16B are cross-sectional conceptual views of composite particles of Example 1 based on TEM observation. In the present specification, a scanning electron microscope may be referred to as "SEM" and a transmission electron microscope may be referred to as "TEM".

DESCRIPTION OF EMBODIMENTS

[Method for Producing Composite Particles of Seed Particles and Cobalt Ferrite Particles]

A method for producing composite particles of seed particles and cobalt ferrite particles according to an embodiment (hereinafter also simply referred to as "composite particles") includes the steps of:

(A) preparing a ferrite precursor in an aqueous solution with a divalent iron salt and a cobalt salt stabilized by a complexing agent;
(B) adding spherical or approximately spherical seed particles to the ferrite precursor; and
(C) further performing a thermal treatment on the ferrite precursor.

Hereinafter, the method for producing composite particles will be described according to the steps.

(A) (Step of Preparing Ferrite Precursor)

Firstly, the complexing agent is dissolved in demineralized water. This is because complexing the ferrite precursor with the complexing agent before performing the thermal treatment enables protection from oxidation by an oxidant. The complexing agent is not particularly limited, and is preferably citrate, nitrilotriacetate, malate, or the like. When citrate is used, the composite particles of seed particles and cobalt ferrite particles to be obtained have a large particle diameter, where an average particle diameter is about 1 to 30 $\mu$m. When nitrilotriacetate or malate is used, fine particles with an average particle diameter equal to or less than 1 $\mu$m will be obtained.

Next, the cobalt salt is dissolved in the above aqueous solution. The cobalt salt is also not particularly limited, and examples thereof include divalent cobalt salt, such as cobalt(II) sulfate, cobalt(II) chloride, cobalt(II) nitrate, and cobalt(II) acetate. In view of availability, etc., cobalt(II) sulfate or cobalt(II) chloride is preferred.

On this occasion, an oxidant may be added. The oxidant is also not particularly limited, and examples thereof include nitrate, hypochlorite, chlorate, perchlorate, permanganate, dichromate, chromate, manganate, peroxide, and the like. From the viewpoint of safety improvement, nitrate is preferred.

Thereafter, deaeration is performed by causing an action of inert gas on the above aqueous solution containing the cobalt salt dissolved therein, thereby reducing a concentration of dissolved oxygen. The deaeration performed herein is to prevent a charge state of metal ions, such as iron, dissolved in the aqueous solution from being affected by the dissolved oxygen in the subsequent steps. For example, it has been known that if free oxygen is present in the reaction system, divalent iron is oxidized and turned into trivalent iron, leading to generation of particles having unintended properties or impurities.

Next, the divalent iron salt is dissolved in the deaerated aqueous solution as described above to prepare a raw material aqueous solution. The divalent iron salt is also not particularly limited, and examples thereof include iron(II) sulfate, iron(II) chloride, iron(II) nitrate, iron(II) acetate, and the like. Iron cleaning waste liquids from blast furnaces or electric furnaces, etc. are also usable as cheap raw materials. In view of availability, etc., iron(II) sulfate or iron(II) chloride is preferred. Incidentally, as described in the section of "Particle Diameter Adjustment" described later, a trivalent iron salt may be further added to the above aqueous solution. The trivalent iron salt is not particularly limited, and examples thereof include iron(III) chloride, iron(III) sulfate, iron(III) nitrate, and the like.

An exemplary combination of the divalent iron salt and the above-described cobalt salt is a combination of iron(II) sulfate and cobalt(II) sulfate or a combination of iron(II) chloride and cobalt(II) chloride.

Then, an alkali is dissolved in demineralized water to prepare an alkaline aqueous solution. As the alkali, any alkali such as sodium hydroxide, potassium hydroxide, calcium hydroxide, and ammonia is selected. An alkaline aqueous solution in which an alkali is originally dissolved may be prepared.

Furthermore, the alkaline aqueous solution is added to the raw material aqueous solution to adjust pH, thereby preparing the ferrite precursor. For stable formation of the complex, the raw materials are preferably dissolved and mixed in the above-described order. Additionally, in order to synthesize ferrite particles having favorable properties subsequent to decomposition of the complex, the pH after addition of the alkaline aqueous solution is preferably adjusted to about 6 to 13.

(B) (Step of Adding Seed Particles)

The seed particles are added to the above-described ferrite precursor. Addition of the seed particles to the ferrite precursor can provide nuclei as bases on which the cobalt ferrite particles are deposited, whereby the particle diameters of the composite particles of seed particles and cobalt ferrite particles can be adjusted.

The seed particles used herein are not particularly limited, and are selected from water-insoluble inorganic compounds such as metals, alloys, and oxides. In particular, iron, iron alloy, iron oxide, spinel ferrite, or silica is preferred as the seed particles due to their affinity with cobalt ferrite. Magnetite, hematite, goethite, or lepidocrocite can be used as iron oxide. Furthermore, due to the use of the spherical or approximately spherical seed particles, the synthesized composite particles of seed particles and cobalt ferrite particles can be formed into a shape close to a sphere.

In the present specification and claims, "spherical" refers to a sphere-like shape. The term "approximately spherical" includes a near-sphere shape and polyhedron consisting of a plurality of faces. Furthermore, in the present specification and claims, those not "spherical" or "approximately spherical" are referred to as "non-spherical". Examples of the "non-spherical" shape include a cube, a rectangular parallelepiped, and the like.

A particle diameter of the seed particle is 0.1 $\mu$m to 50 $\mu$m, preferably 0.5 $\mu$m to 30 $\mu$m, and more preferably 1 $\mu$m to 20 $\mu$m. A measurement method of the particle diameter of the seed particle includes a laser diffraction/light scattering method.

(C) (Thermal Treatment Step)

The thermal treatment is performed by a hydrothermal method using a pressure vessel. The pressure vessel may be a common highpressure reaction vessel, and examples thereof include an autoclave, a pressure pot, a boiler, etc. In view of versatility, etc., an autoclave is preferred.

In a common Schikorr method at high temperature, the reaction is often allowed to proceed at a high temperature equal to or higher than 200°C, whereas in the present embodiment, due to the selection of the complexing agent, it is possible to synthesize magnetic particles including the composite particles of seed particles and cobalt ferrite particles within a temperature range of about 130 to 300°C, preferably about 130 to 280°C, more preferably 130 to 260°C, or further preferably about 130 to 240°C.

From the viewpoint of an expectation of a high reaction rate, the temperature of the thermal treatment is preferably higher than 190°C and equal to or lower than 300°C. Meanwhile, impurities tend to be incorporated when the reaction temperature exceeds about 270°C. Accordingly, from the viewpoint of a balance of purity and the reaction rate, the temperature during the reaction is preferably 190 to 270°C, more preferably 190 to 260°C, even more preferably 190 to 240°C, and further preferably 195 to 240°C.

A duration of the thermal treatment is preferably 1 to 50 hours, more preferably 1 to 45 hours, and further preferably 1 to 40 hours.

The temperature of the thermal treatment does not need to be constant, and a plurality of stages may be provided to perform the treatment at different temperatures. For example, as a first stage, it is preferable to heat to a temperature range of 190 to 210°C and maintain a first achieving temperature thereof. The first achieving temperature is maintained preferably for 1 to 14 hours, more preferably for 1 to 12 hours, and even more preferably for 4 to 12 hours.

Furthermore, as a second stage, the thermal treatment can be performed subject to heating to a temperature range of 210 to 240°C, preferably a temperature range of 220 to 240°C, and maintaining of a second achieving temperature thereof. The second achieving temperature is maintained preferably for 0.5 to 12 hours, more preferably for 0.5 to 10 hours, and even more preferably for 0.5 to 2 hours.

In the case of providing a plurality of stages and performing the thermal treatment at different temperatures, a relatively low temperature stage suppresses excessive progress of the oxidation reaction of the ferrite precursor to thereby suppress excessive agglomeration of the seed particles, and contributes to formation of the composite particles of seed particles and cobalt ferrite particles into a shape close to a sphere. A relatively high temperature stage facilitates the oxidation reaction of the ferrite precursor and thereby contributes to enhancement of the magnetic properties, enhancement of a yield, and adjustment of the particle diameter. Furthermore, by providing a plurality of stages to perform the thermal treatment, a total duration of the thermal treatment can be shortened.

(Role of Complexing Agent)

While the complexing agent plays a big role in the ferrite generation reaction, it is believed that the generation reaction proceeds as follows.

At a stage prior to the start of the hydrothermal treatment, no oxidation reaction with an oxidant occurs, and the ferrite precursor is stably present in the aqueous solution due to the complexation action of a ligand of the complexing agent. This prevents generation of a hydroxide, which is easily oxidized and unstable, and thereby stably protects the precursor.

Next, once the heating is started, the complexing agent protecting the metal ions gradually decomposes, making the metal ions susceptible to an oxidation action. On this occasion, in order to uniformly facilitate the oxidation reaction for ferrite formation, an oxidant such as sodium nitrate may be added. Under environment involving the oxidant, the ferrite precursor is affected by the oxidation action of the oxidant, and even in the absence of the oxidant, the ferrite precursor is oxidized by an action of hydrothermal environment, resulting in formation of the ferrite.

Due to the complexation action of the complexing agent, it is possible to delay progress of the oxidation reaction of the ferrite precursor in the thermal treatment under hydrothermal treatment conditions. This enables to increase the particle diameters of the ferrite particles to be synthesized, and further enables to produce the particles uniform in particle diameter. In addition, by controlling the progress of the oxidation reaction of the ferrite precursor, excessive agglomeration of the seed particles can be suppressed, and as a result, approximately spherical composite particles of seed particles and cobalt ferrite particles can be produced.

(Particle Diameter Adjustment 1: Addition of Trivalent Iron Salt)

In the method for producing composite particles of seed particles and cobalt ferrite particles according to the present embodiment, a means to adjust the particle diameters of the composite particles of seed particles and cobalt ferrite particles to be produced can be employed in each step of the production method. Hereinafter, several means to adjust the particle diameter will be recited. These means can be employed alone or in combination of a plurality of means.

By means of addition of the trivalent iron salt to the raw material aqueous solution (aqueous solution of the divalent iron salt and the cobalt salt), the trivalent iron salt is added to the aqueous solution containing the divalent iron salt and the cobalt salt stabilized by the complexing agent, whereby the particle diameters of the composite particles of seed particles and cobalt ferrite particles can be adjusted. According to this means, a trivalent iron ion of the trivalent iron salt acts as a nucleus for the ferrite particle formation, so that the reaction of ferrite formation is facilitated with or without the oxidant, and also the particle diameters of the produced composite particles of seed particles and ferrite particles can be adjusted.

The trivalent iron salt used herein is not particularly limited, and examples thereof include iron(III) chloride, iron(III) sulfate, iron(III) nitrate, and the like. Iron cleaning waste liquids from blast furnaces or electric furnaces, etc. are also favorable as cheap raw materials.

(Particle Diameter Adjustment 2: Addition of pH Buffer)

By means of addition of a pH buffer to the alkaline aqueous solution (aqueous solution of the alkali and the complexing agent), a pH buffer solution is added to the aqueous solution containing the divalent iron salt and the cobalt salt stabilized by the complexing agent, whereby the particle diameters of the composite particles of seed particles and cobalt ferrite particles can be adjusted. The ferrite generation reaction is accompanied by the decrease in pH, and the decrease in pH leads to suppression of decomposition of the ferrite precursor, thereby suppressing the ferrite generation reaction. Thus, addition of the pH buffer to suppress the decrease in pH can facilitate growth of the ferrite particles.

The pH buffer used herein is selected from boric acid, sodium carbonate, sodium hydrogen carbonate, and the like.

(Particle Diameter Adjustment 3: Press-Injection of Alkaline Aqueous Solution/Ferrite Precursor upon Thermal Treatment)

In the middle or after completion of the thermal treatment step, the alkaline aqueous solution or the ferrite precursor (complex) is press-injected into a pressure vessel, and thereafter the thermal treatment is further continued, whereby the particle diameters of the composite particles of seed particles and cobalt ferrite particles can be adjusted.

When the alkaline aqueous solution is press-injected, pH inside the reaction vessel increases, which leads to progress of decomposition of the unreacted ferrite precursor and facilitation of the ferrite generation reaction. As a result of this, particle growth (coarse-graining) can be achieved. The alkaline aqueous solution is not particularly limited, and can be appropriately selected from sodium hydroxide, potassium hydroxide, calcium hydroxide, ammonia, and the like.

Meanwhile, press-injection of the ferrite precursor (complex) leads to addition of the raw material for the ferrite formation, which can facilitate the particle growth of the ferrite particles. The method for producing the ferrite precursor is as described above.

[Composite Particles of Seed Particles and Cobalt Ferrite Particles]

As a parameter of the particle diameter of the composite particles of seed particles and cobalt ferrite particles, a particle diameter corresponding to a cumulative value of 50% or 95% based on a particle diameter distribution can be used. The particle size distribution of the composite particles can be measured, for example, by a laser diffraction/light scattering particle diameter distribution measurement apparatus (manufactured by MicrotracBEL Corp., model No. "MT3300EXII"). The specific particle diameter distribution is as follows. For the composite particles of seed particles and cobalt ferrite particles, the particle diameter corresponding to the cumulative value of 50% based on the particle diameter distribution is within a range of 1 to 30 $\mu$m, and the particle diameter corresponding to the cumulative value of 95% based on the particle diameter distribution is within a range of 5 to 50 $\mu$m.

The composite particles of seed particles and cobalt ferrite particles are particles having an average circularity of 0.7 to 1.0, more preferably within a range of 0.70 to 0.95, as well as magnetic properties including a residual magnetic moment equal to or more than 10 emu/g and a coercivity of 100 to 1000 Oe.

The composite particles of seed particles and cobalt ferrite particles have a rounded shape and are uniform in particle diameter. An aspect ratio of the composite particle is approximately 1.

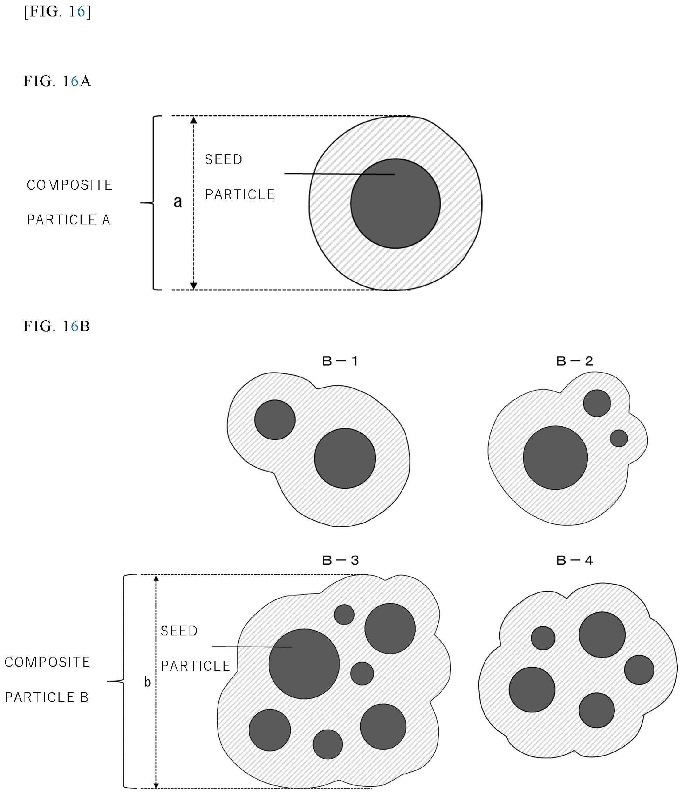

As mentioned later in the description of FIGs. 16A and 16B, one aspect of the composite particles of seed particles and cobalt ferrite particles includes a core-shell type composite particle having a single seed particle as shown in FIG. 16A, and sea-island type composite particles B-1 to B-4 having a plurality of seed particles as shown in FIG. 16B. Although the number of the seed particles is not limited, examples thereof include 2 to 15 seed particles.

The composite particles of seed particles and cobalt ferrite particles of the present embodiment have the relatively large particle diameter, the rounded shape, and the narrow width of the particle diameter distribution, and thus are characterized by less agglomerative properties between the particles and availability for closest packing upon molding, which can enhance magnetic properties of a molded article or increase a bulk density. Furthermore, due to the rounded shape of the composite particles of seed particles and cobalt ferrite particles according to the present embodiment, it is possible to reduce the usage of a surface treatment agent when treating surfaces of the composite particles of seed particles and cobalt ferrite particles. Accordingly, by using them in copier toners, magnetic inks, and MR fluids, their properties can sufficiently be exhibited.

(White Powder)

The composite particles of seed particles and cobalt ferrite particles can be made into white powder by whitening, or colored powder by further providing a colored layer after whitening.

The whitening can be performed by a known method, but preferred is, for example, the whitening method (Japanese Patent No. 4113045), which is patented by the present applicant.

This whitening method is to whiten powder by disposing a titanium oxide film between a base particle and a metallic silver film. Specifically, this method can be performed by forming the titanium oxide film on the surfaces of the cobalt ferrite particles through hydrolysis of titanium alkoxide (for example, WO 96/28269), a reaction from a titanium salt aqueous solution (for example, Japanese Unexamined Patent Application Publication No. H11-131102), or the like, and thereafter forming the metallic silver film by a known method such as electroless plating. With this method, it is possible to produce white powder including the titanium oxide film and the metallic silver film in this order on the surfaces of the composite particles of seed particles and cobalt ferrite particles of the present embodiment. As a result, it is possible to improve a lightness L* of the composite particles of seed particles and cobalt ferrite particles to 75 or higher.

EXAMPLES

Hereinafter, the present invention will be described in more detail with reference to examples, but the present invention is not limited to these examples. Furthermore, the particle size distribution, the average circularity, and the magnetic properties of the produced composite particles of seed particles and cobalt ferrite particles were measured by the following methods.

(Particle Diameter Measurement)

The particle size distribution of the composite particles of seed particles and cobalt ferrite particles was measured by a laser diffraction/light scattering particle diameter distribution measurement apparatus (manufactured by MicrotracBEL Corp., model No. "MT3300EXII"), and $D_{50}$ as the particle diameter corresponding to the cumulative value of 50% based on the particle diameter distribution as well as $D_{95}$ as the particle diameter corresponding to the cumulative value of 95% based on the particle diameter distribution were evaluated.

(SEM Observation)

By using a scanning electron microscope (Hitachi High-Tech Corporation, model No. "S-4800"), the surfaces of the obtained composite particles were observed.

(Average Circularity Measurement)

The average circularity of the composite particles of seed particles and cobalt ferrite particles was evaluated by image analysis of SEM photographs (software "Mac-View Ver. 4" manufactured by MOUNTECH Co., Ltd.). For 100 or more composite particles per sample, a circularity $4\pi S/L^2$ was calculated by using a project area S and a circumference L on the SEM photograph, and an average value thereof was defined as the average circularity.

(Magnetic Properties Measurement)

The magnetic properties of the composite particles of seed particles and cobalt ferrite particles were evaluated with a vibrating sample magnetometer (VSM) (manufactured by TAMAKAWA CO., LTD., model No. "TM-VSM101483N7-MRO"). A hysteresis curve or a demagnetization curve was obtained at a maximum magnetic filed of 10,000 Oe, and a saturation magnetic moment, a residual magnetic moment, and a coercivity were measured.

[Example 1] (Production of Composite Particles of Seed Particles and Cobalt Ferrite Particles)

(1) Preparation of Raw Material Aqueous Solution

604.73 g of trisodium citrate dihydrate ($C_6H_5Na_3O_7 \cdot 2H_2O$), 95.38 g of cobalt(II) sulfate heptahydrate ($CoSO_4 \cdot 7H_2O$), and 17.30 g of sodium nitrate ($NaNO_3$) were dissolved in 1537.55 g of demineralized water. Subsequent to deaeration with $N_2$, 471.72 g of iron(II) sulfate heptahydrate ($FeSO_4 \cdot 7H_2O$) was dissolved therein, thereby preparing a raw material aqueous solution.

(2) Preparation of Ferrite Precursor

A 48.5% sodium hydroxide aqueous solution was added to the raw material aqueous solution to adjust pH to 7.5 while deaeration with $N_2$ was continuously carried out, thereby preparing a ferrite precursor.

(3) Preparation of Magnetic Particles by Hydrothermal Treatment

Into an autoclave purged with $N_2$, 50.00 g of iron (Fe) as the seed particles was introduced together with the ferrite precursor, and a hydrothermal treatment was performed under stirring at 200°C for 16 hours, thereby obtaining magnetic particles.

(4) Washing of Magnetic Particles

The magnetic particles were filtered, and washed by passing through demineralized water.

(5) Drying of Magnetic Particles

The washed magnetic particles were dried at 250°C in the atmosphere for 1 hour.

[Example 2]

Magnetic particles were produced under the same conditions as in Example 1 except that in (3) Preparation of Magnetic Particles by Hydrothermal Treatment in Example 1, the amount of iron (Fe) was changed to 100.00 g.

[Example 3]

Magnetic particles were produced under the same conditions as in Example 1 except that in (3) Preparation of Magnetic Particles by Hydrothermal Treatment in Example 1, the amount of iron (Fe) was changed to 75.00 g, and the hydrothermal treatment was changed to a two-stage treatment including a first stage at 200°C for 12 hours and a second stage at 220°C for 2 hours.

[Example 4]

Magnetic particles were produced under the same conditions as in Example 1 except that in (3) Preparation of Magnetic Particles by Hydrothermal Treatment in Example 1, the hydrothermal treatment was changed to a two-stage treatment including a first stage at 200°C for 4 hours and a second stage at 240°C for 30 minutes.

[Example 5]

Magnetic particles were produced under the same conditions as in Example 1 except that in (3) Preparation of Magnetic Particles by Hydrothermal Treatment in Example 1, the amount of iron (Fe) was changed to 25.00 g and the hydrothermal treatment was changed such that the treatment was performed at 190°C for 40 hours.

[Example 6]

Magnetic particles were produced under the same conditions as in Example 1 except that in (1) Preparation of Raw Material Aqueous Solution in Example 1, the amount of trisodium citrate dihydrate ($C_6H_5Na_3O_7 \cdot 2H_2O$) was changed to 778.36 g, and in (3) Preparation of Magnetic Particles by Hydrothermal Treatment, 50.00 g of iron (Fe) as the seed particles was changed to 14.10 g of zinc ferrite, which is one type of spinel ferrite.

[Example 7]

Magnetic particles were produced under the same conditions as in Example 1 except that in (3) Preparation of Magnetic Particles by Hydrothermal Treatment in Example 1, iron (Fe) as the seed particles was changed to alnico, which is one type of iron alloy.

[Example 8]

Magnetic particles were produced under the same conditions as in Example 1 except that in (3) Preparation of Magnetic Particles by Hydrothermal Treatment in Example 1, 50.00 g of iron (Fe) as the seed particles was changed to 25.00 g of magnetite, which is one type of iron oxide.

[Example 9]

Magnetic particles were produced under the same conditions as in Example 1 except that in (3) Preparation of Magnetic Particles by Hydrothermal Treatment in Example 1, 50.00 g of iron (Fe) as the seed particles was changed to 6.04 g of silica.

[Example 10]

Magnetic particles were produced under the same conditions as in Example 1 except that in (1) Preparation of Raw Material Aqueous Solution in Example 1, 471.72 g of iron(II) sulfate heptahydrate ($FeSO_4 \cdot 7H_2O$) as the divalent iron salt was changed to 337.29 g of iron(II) chloride tetrahydrate ($FeCl_2 \cdot 4H_2O$) and 95.38 g of cobalt(II) sulfate heptahydrate ($CoSO_4 \cdot 7H_2O$) as the cobalt salt was changed to 80.73 g of cobalt(II) chloride hexahydrate ($CoCl_2 \cdot 6H_2O$), and in (3) Preparation of Magnetic Particles by Hydrothermal Treatment, the amount of iron (Fe) was changed to 14.10 g.

[Reference Example 1]

Magnetic particles were produced under the same conditions as in Example 1 except that in (1) Preparation of Raw Material Aqueous Solution in Example 1, sodium nitrate ($NaNO_3$) added as the oxidant was not used.

[Reference Example 2]

Magnetic particles were produced under the same conditions as in Example 1 except that in (1) Preparation of Raw Material Aqueous Solution in Example 1, sodium nitrate ($NaNO_3$) added as the oxidant was not used; and in (3) Preparation of Magnetic Particles by Hydrothermal Treatment, the hydrothermal treatment was changed to a two-stage treatment including a first stage at 200°C for 12 hours and a second stage at 220°C for 10 hours.

[Comparative Example 1]

Magnetic particles were produced under the same conditions as in Example 1 except that in (3) Preparation of Magnetic Particles by Hydrothermal Treatment in Example 1, 50.00 g of iron (Fe) was changed to 25.00 g of magnetite ($Fe_3O_4$), which is one type of iron oxide. The magnetite used in Comparative Example 1 had a non-spherical shape.

[Comparative Example 2]

Magnetic particles were produced under the same conditions as in Example 1 except that in (3) Preparation of Magnetic Particles by Hydrothermal Treatment in Example 1, 50.00 g of iron (Fe) was changed to 50.00 g of magnetite ($Fe_3O_4$), which is one type of iron oxide. The magnetite used in Comparative Example 2 had a non-spherical shape.

[Comparative Example 3]

Magnetic particles were produced under the same conditions as in Example 1 except that in (1) Preparation of Raw Material Aqueous Solution in Example 1, trisodium citrate dihydrate ($C_6H_5Na_3O_7 \cdot 2H_2O$) as the complexing agent and sodium nitrate ($NaNO_3$) as the oxidant were not used.

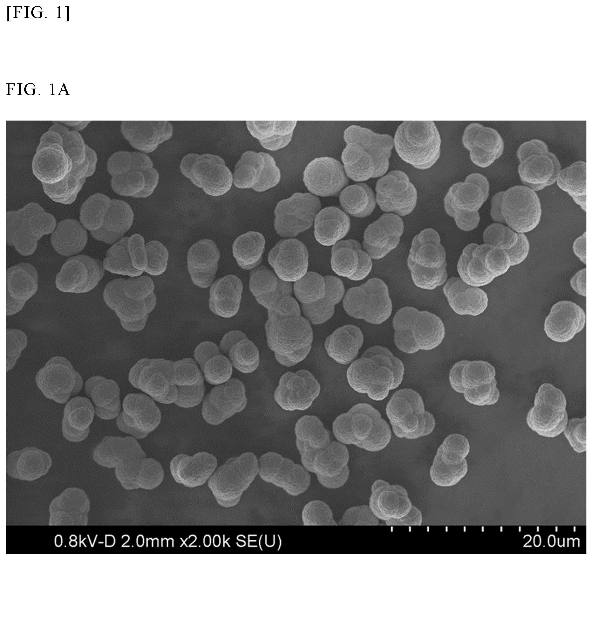

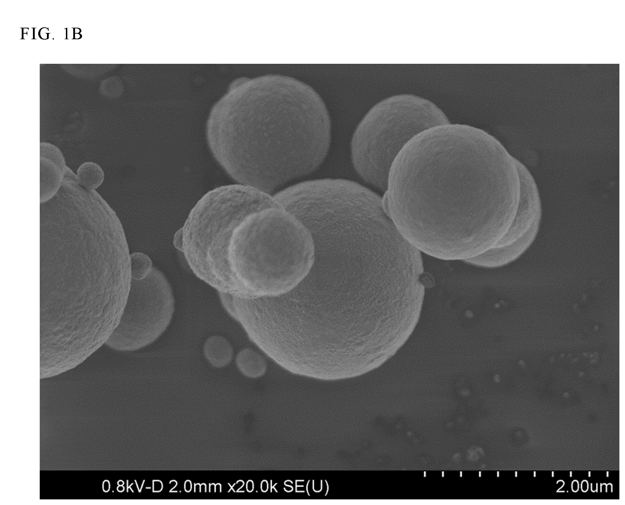

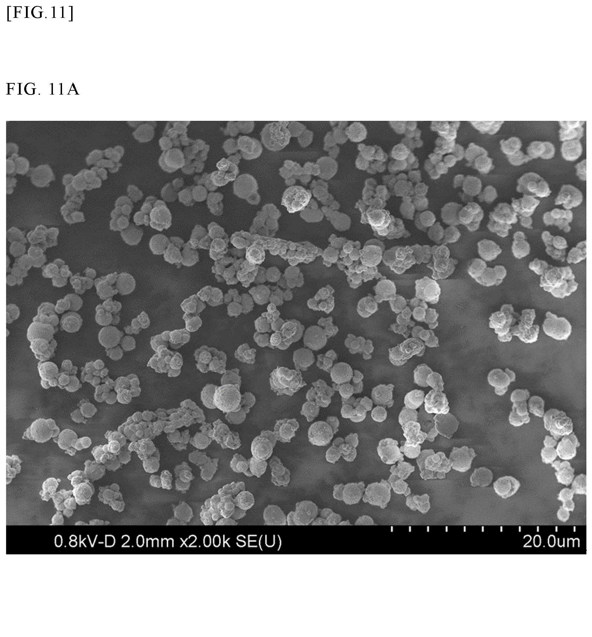

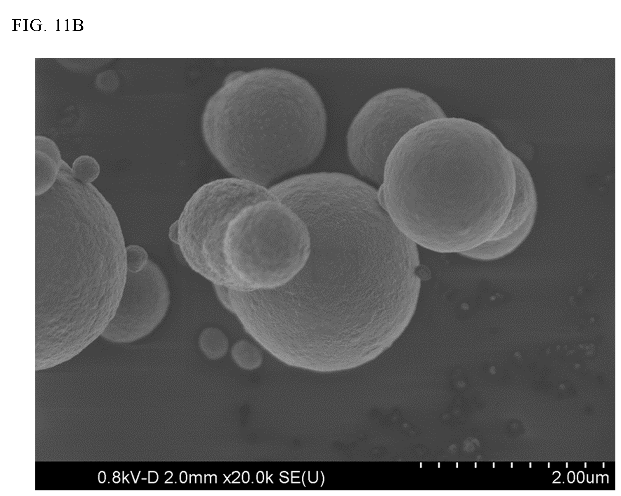

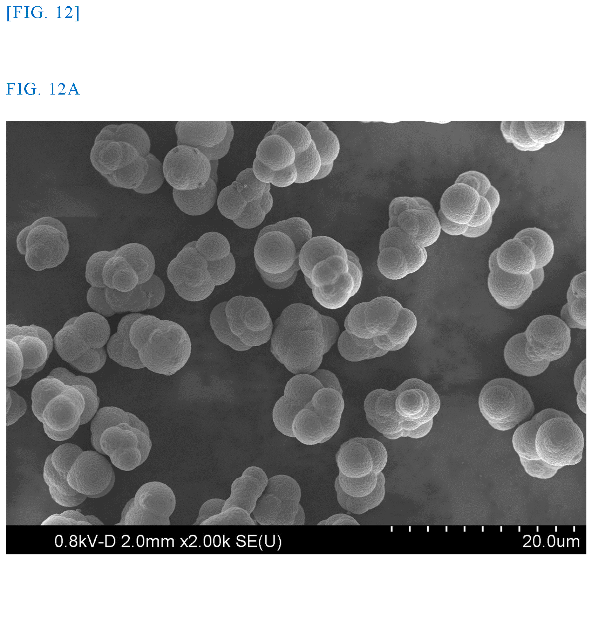

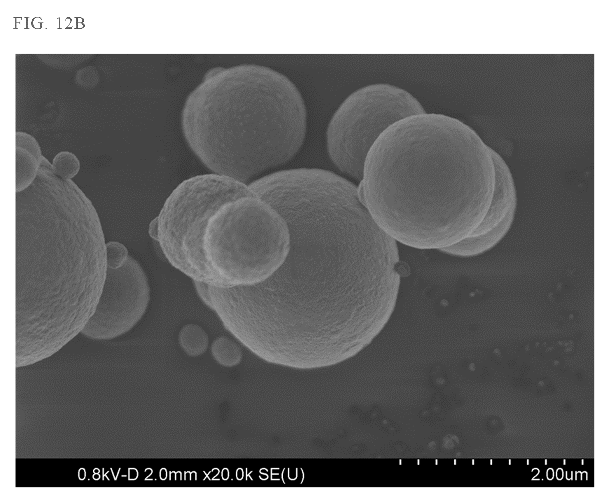

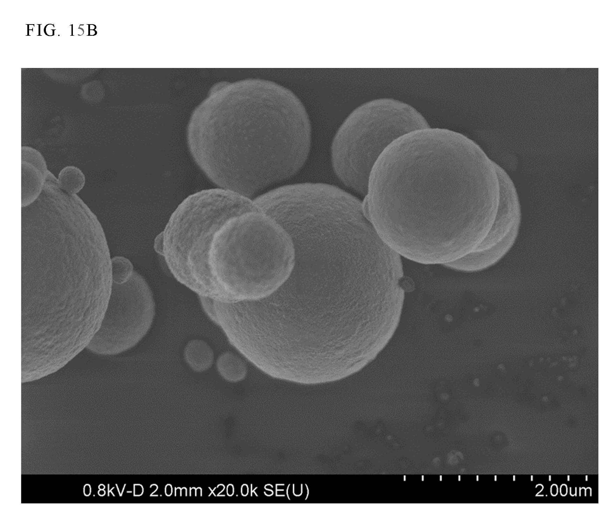

The respective properties of the composite particles obtained in Examples, Reference Examples, and Comparative Examples are together shown in Table 1. In addition, SEM photographs of the composite particles and their seed particles in Examples 1 to 10, Reference Example 1, Reference Example 2, and Comparative Examples 1 to 3 are shown in FIGs. 1A, 1B to 15A, and 15B.

[Table 1]

| No. | Example 1 | Example 2 | Example 3 | Example 4 | Example 5 | Example 6 | Example 7 | Example 8 | Example 9 | Example 10 | Reference Example 1 | Reference Example 2 | Comparative Example 1 | Comparative Example 2 | Comparative Example 3 |
|---|---|---|---|---|---|---|---|---|---|---|---|---|---|---|---|
| Complexing agent | citrate | citrate | citrate | citrate | citrate | citrate | citrate | citrate | citrate | citrate | citrate | citrate | citrate | citrate | N/A |
| Oxidant | nitrate | nitrate | nitrate | nitrate | nitrate | nitrate | nitrate | nitrate | nitrate | nitrate | N/A | N/A | nitrate | nitrate | N/A |
| Divalent iron salt | iron(II) sulfate | iron(II) sulfate | iron(II) sulfate | iron(II) sulfate | iron(II) sulfate | iron(II) sulfate | iron(II) sulfate | iron(II) sulfate | iron(II) sulfate | iron(II) chloride | iron(II) sulfate | iron(II) sulfate | iron(II) sulfate | iron(II) sulfate | iron(II) sulfate |
| Cobalt salt | cobalt (II) sulfate | cobalt (II) sulfate | cobalt (II) sulfate | cobalt (II) sulfate | cobalt (II) sulfate | cobalt (II) sulfate | cobalt (II) sulfate | cobalt (II) sulfate | cobalt (II) sulfate | cobalt (II) chloride | cobalt (II) sulfate | cobalt (II) sulfate | cobalt (II) sulfate | cobalt (II) sulfate | cobalt (II) sulfate |
| Seed particle | iron | iron | iron | iron | iron | zinc ferrite | alnico | iron oxide | silica | iron | iron | iron | iron oxide | iron oxide | iron |
| Temperature (°C) | 200 | 200 | 200, 220 | 200, 240 | 190 | 200 | 200 | 200 | 200 | 200 | 200 | 200, 220 | 200 | 200 | 200 |
| Heating time (hour) | 16 | 16 | 12, 2 | 4, 0.5 | 40 | 16 | 16 | 16 | 16 | 16 | 16 | 12, 10 | 16 | 16 | 16 |
| $D_{50}$(μm)[*1] | 5.58 | 4.63 | 5.85 | 6.23 | 5.17 | 29.73 | 11.27 | 23.16 | 9.06 | 14.21 | 3.14 | 8.79 | 5.26 | 3.96 | 4.48 |
| $D_{95}$(μm)[*1] | 9.81 | 8.10 | 11.32 | 11.89 | 9.38 | 47.31 | 24.41 | 38.43 | 15.47 | 25.58 | 5.49 | 17.01 | 9.46 | 6.98 | 19.57 |
| Average circularity | 0.81 | 0.79 | 0.80 | 0.76 | 0.80 | 0.92 | 0.86 | 0.80 | 0.70 | 0.88 | 0.61 | 0.83 | 0.69 | 0.63 | 0.53 |
| Saturation magnetic moment (emu/g) | 110.2 | 129.7 | 118.0 | 102.4 | 97.97 | 85.57 | 93.82 | 83.99 | 76.83 | 92.68 | 159.9 | 112.1 | 83.90 | 83.75 | 38.96 |
| Residual magnetic moment (emu/g) | 15.86 | 14.07 | 16.62 | 20.39 | 18.12 | 22.56 | 17.81 | 25.49 | 19.64 | 19.72 | 11.56 | 29.74 | 19.29 | 21.49 | 12.51 |
| Coercivity (Oc) | 293.5 | 286.1 | 329.0 | 425.5 | 335.3 | 311.8 | 272.6 | 414.7 | 346.0 | 267.4 | 244.8 | 542.2 | 272.4 | 285.5 | 690.5 |
| Reaction rate (%) | 79.9 | 81.5 | 84.1 | 75.2 | 81.3 | 43.6 | 90.8 | 53.8 | 57.2 | 70.7 | 8.6 | 63.5 | 84.7 | 86.1 | - |

*1: particle diameters respectively corresponding to the cumulative values of 50% and 95% based on the particle diameter distribution.

The reaction rates of Examples 1 to 3, Examples 5 to 10, Reference Example 1, Reference Example 2, Comparative Example 1, and Comparative Example 2 in the table were calculated according to the following Formula A. The reaction rate of Example 4 was calculated according to Formula B. It was impossible to calculate the reaction rate of Comparative Example 3 because the reaction product was contaminated with impurities.

(mass of powder actually obtained by hydrothermal treatment of ferrite precursor - prepared amount of seed particles)/{theoretical mass of cobalt ferrite ($Co_xFe_{(3-x)}O_4$) to be obtained when all iron and cobalt in prepared raw materials[*2] are reacted}$\times$100     Formula A:

{1-(mass concentration of remaining iron and cobalt dissolved in aqueous solution after completion of hydrothermal treatment)/(theoretical mass concentration of iron and cobalt in ferrite precursor before hydrothermal treatment)}$\times$100     Formula B:

[*2]: iron and cobalt in the prepared raw material shall not include the mass of iron and cobalt contained in the seed particles.

For the composite particles of Example 1, the average circularity was 0.81, the particle diameter corresponding to the cumulative value of 50% based on the particle diameter distribution was 5.58 $\mu$m, and the particle diameter corresponding to the cumulative value of 95% based on the particle diameter distribution was 9.81 $\mu$m.

As shown in FIG. 1A, the composite particles of Example 1 had a rounded shape.

For the composite particles of Example 2, the average circularity was 0.79, the particle diameter corresponding to the cumulative value of 50% based on the particle diameter distribution was 4.63 $\mu$m, and the particle diameter corresponding to the cumulative value of 95% based on the particle diameter distribution was 8.10 $\mu$m.

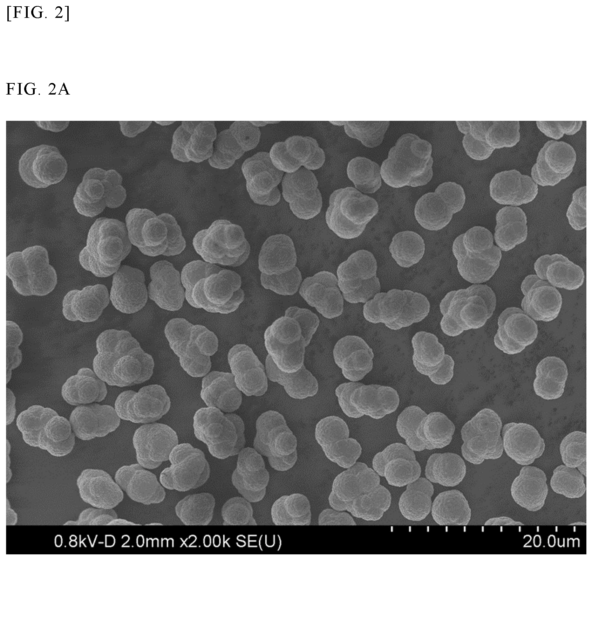

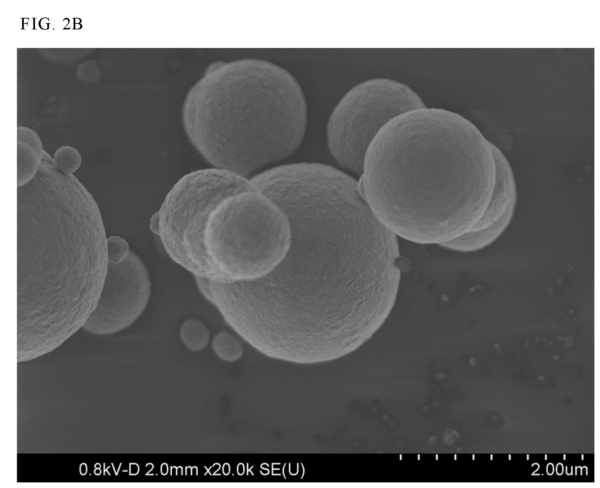

As shown in FIG. 2A, the composite particles of Example 2 had a rounded shape.

For the composite particles of Example 3 in which the thermal treatment was performed in two stages with the first achieving temperature of 200°C and the second achieving temperature of 220°C, the average circularity was 0.80, the particle diameter corresponding to the cumulative value of 50% based on the particle diameter distribution was 5.85 $\mu$m, and the particle diameter corresponding to the cumulative value of 95% based on the particle diameter distribution was 11.32 $\mu$m.

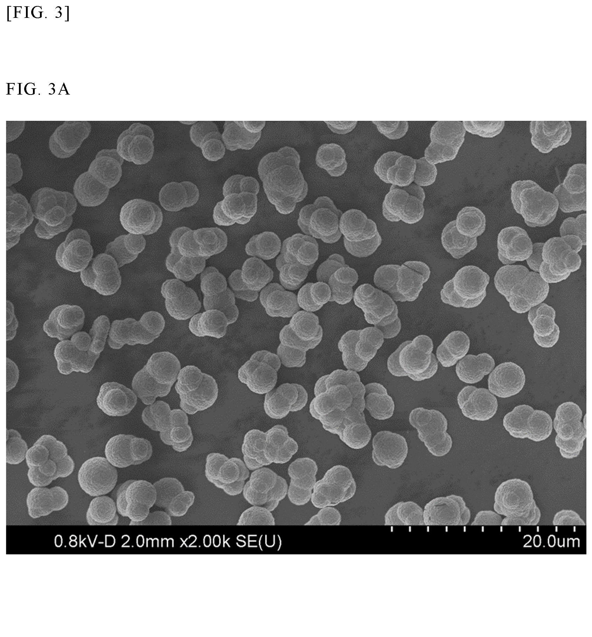

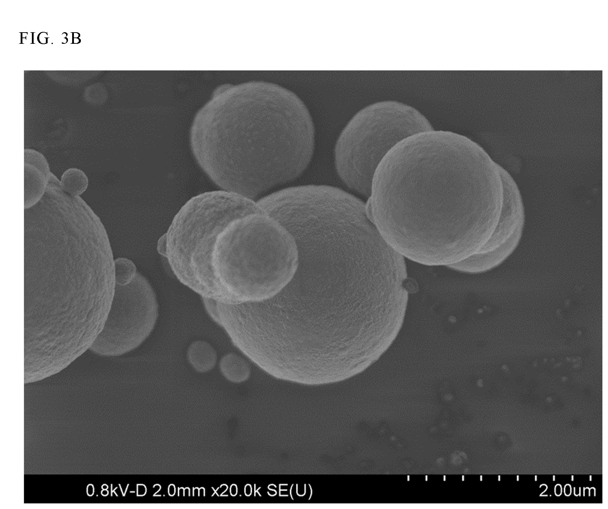

As shown in FIG. 3A, the composite particles of Example 3 had a rounded shape.

For the composite particles of Example 4 in which the thermal treatment was performed in two stages with the first achieving temperature of 200°C and the second achieving temperature of 240°C, the average circularity was 0.76, the particle diameter corresponding to the cumulative value of 50% based on the particle diameter distribution was 6.23 $\mu$m, and the particle diameter corresponding to the cumulative value of 95% based on the particle diameter distribution was 11.89 $\mu$m.

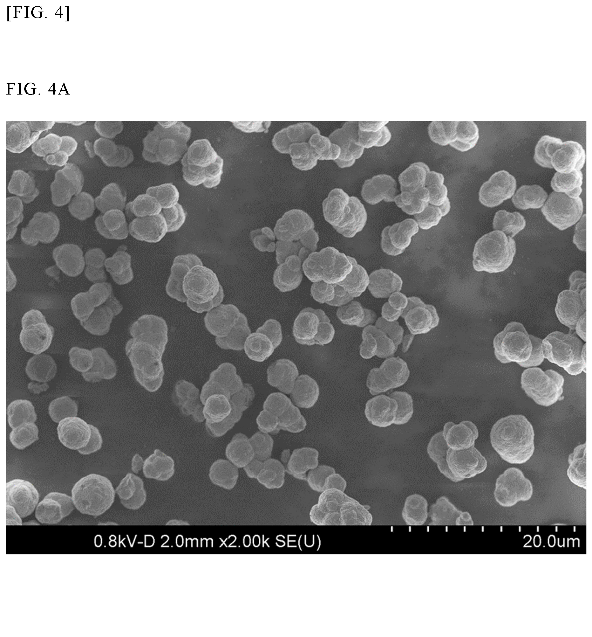

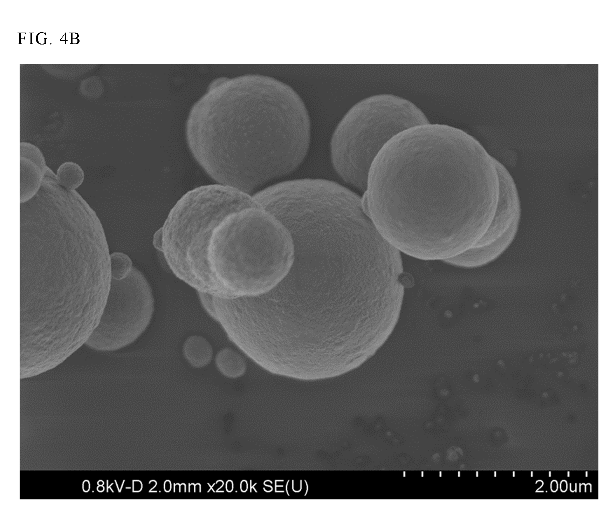

As shown in FIG. 4A, the composite particles of Example 4 had a rounded shape.

For the composite particles of Example 5 in which the thermal treatment was performed at 190°C, the average circularity was 0.80, the particle diameter corresponding to the cumulative value of 50% based on the particle diameter distribution was 5.17 $\mu$m, and the particle diameter corresponding to the cumulative value of 95% based on the particle diameter distribution was 9.38 $\mu$m.

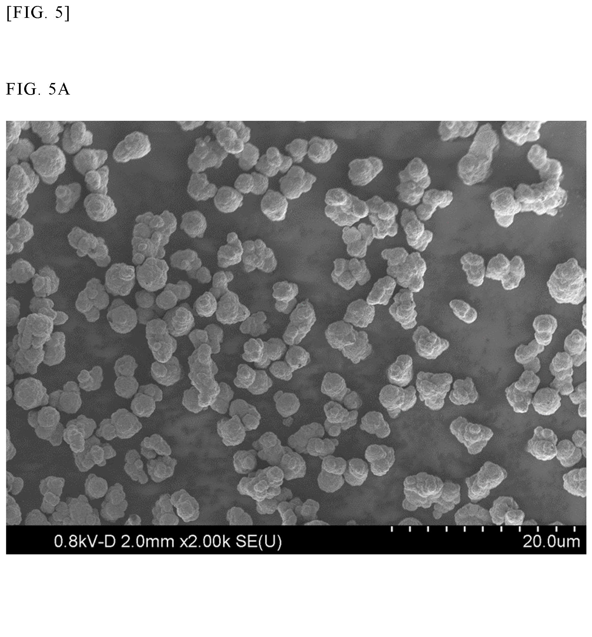

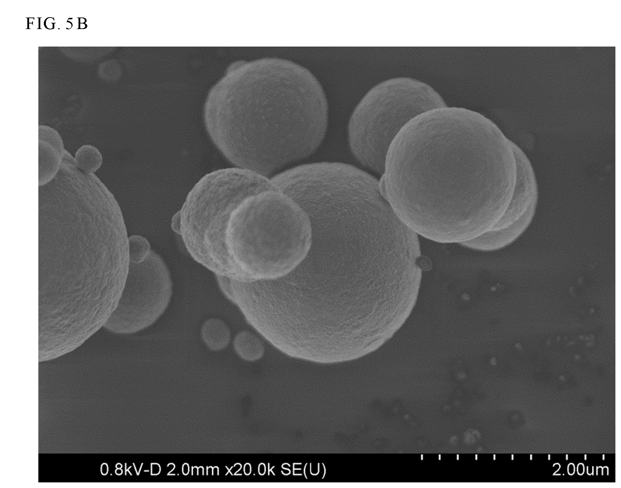

As shown in FIG. 5A, the composite particles of Example 5 had a rounded shape.

For the composite particles of Example 6 in which zinc ferrite as one type of spinel ferrite was used as the seed particles, the average circularity was 0.92, the particle diameter corresponding to the cumulative value of 50% based on the particle diameter distribution was 29.73 $\mu$m, and the particle diameter corresponding to the cumulative value of 95% based on the particle diameter distribution was 47.31 $\mu$m.

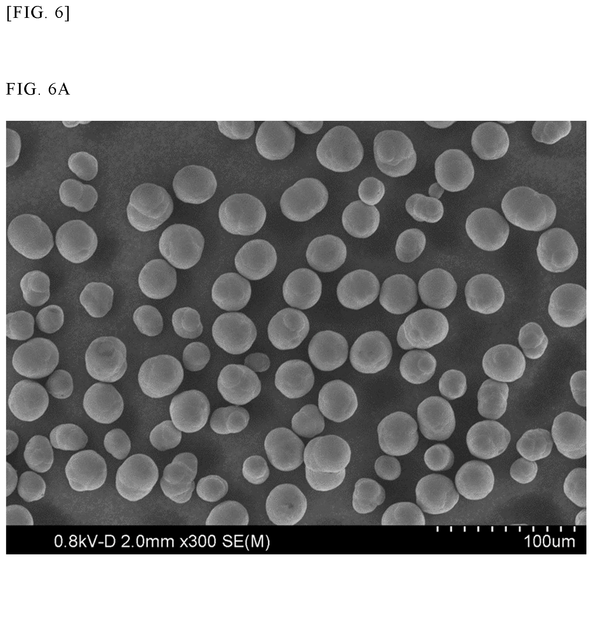

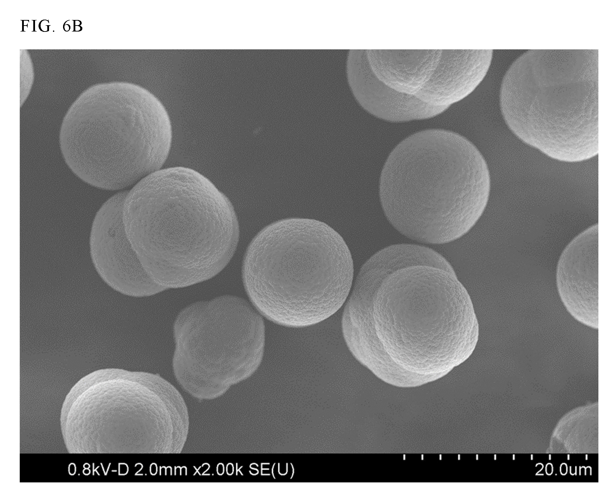

As shown in FIG. 6A, the composite particles of Example 6 had a rounded shape.

For the composite particles of Example 7 in which alnico as iron alloy was used as the seed particles, the average circularity was 0.86, the particle diameter corresponding to the cumulative value of 50% based on the particle diameter distribution was 11.27 $\mu$m, and the particle diameter corresponding to the cumulative value of 95% based on the particle diameter distribution was 24.41 $\mu$m.

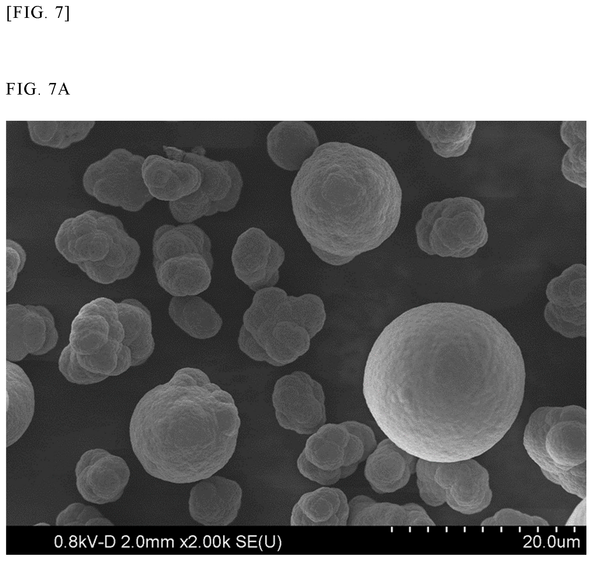

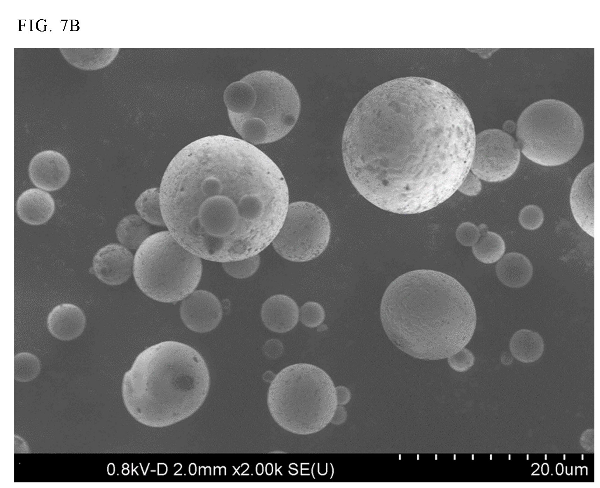

As shown in FIG. 7A, the composite particles of Example 7 had a rounded shape.

For the composite particles of Example 8 in which approximately spherical iron oxide was used as the seed particles, the average circularity was 0.80, the particle diameter corresponding to the cumulative value of 50% based on the particle diameter distribution was 23.16 $\mu$m, and the particle diameter corresponding to the cumulative value of 95% based on the particle diameter distribution was 38.43 $\mu$m.

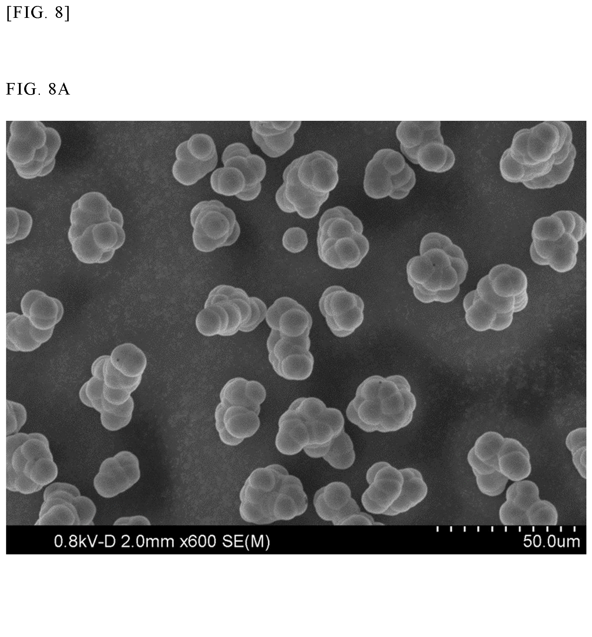

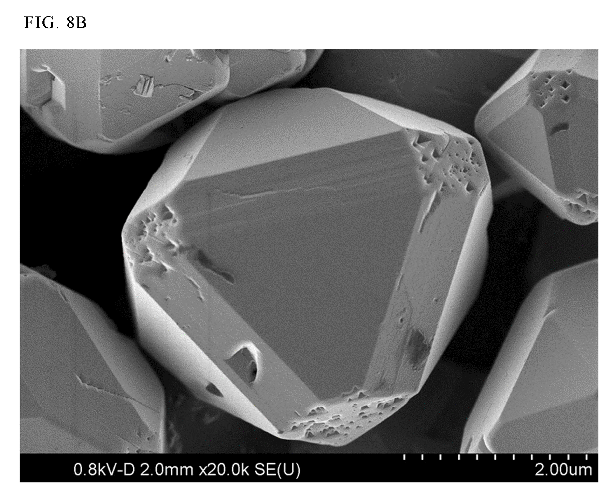

As shown in FIG. 8A, the composite particles of Example 8 had a rounded shape.

For the composite particles of Example 9 in which silica was used as the seed particles, the average circularity was 0.70, the particle diameter corresponding to the cumulative value of 50% based on the particle diameter distribution was 9.06 $\mu$m, and the particle diameter corresponding to the cumulative value of 95% based on the particle diameter distribution was 15.47 $\mu$m.

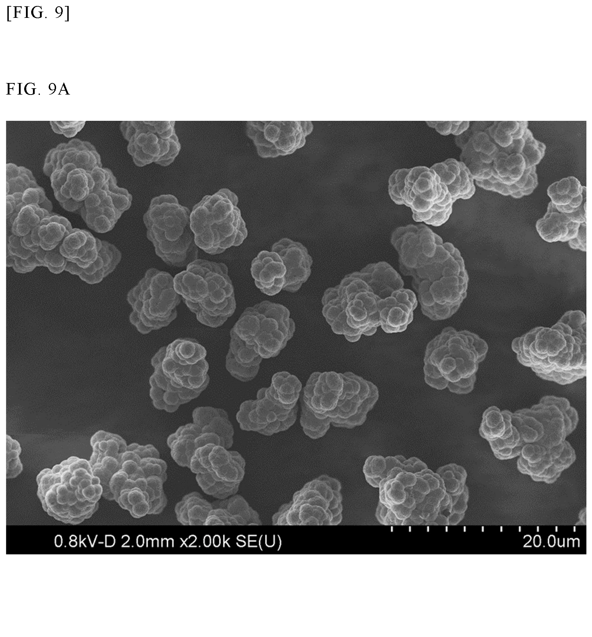

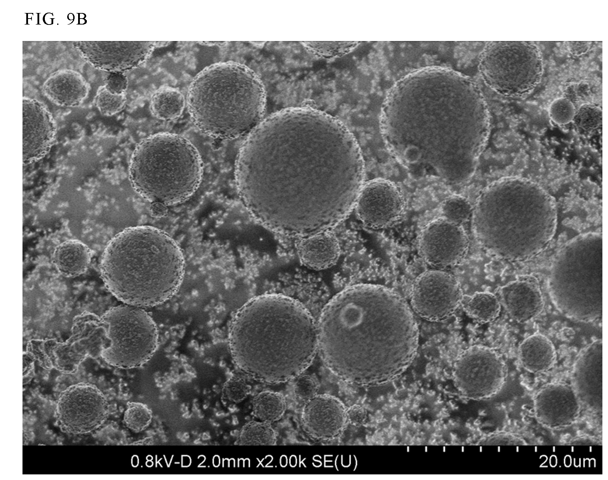

As show in FIG. 9A, the composite particles of Example 9 had a rounded shape.

For the composite particles of Example 10 in which iron(II) chloride tetrahydrate was added as the divalent iron salt and cobalt(II) chloride hexahydrate was added as the cobalt salt for preparation of the raw material aqueous solution, the average circularity was 0.88, the particle diameter corresponding to the cumulative value of 50% based on the particle diameter distribution was 14.21 $\mu$m, and the particle diameter corresponding to the cumulative value of 95% based on the particle diameter distribution was 25.58 $\mu$m.

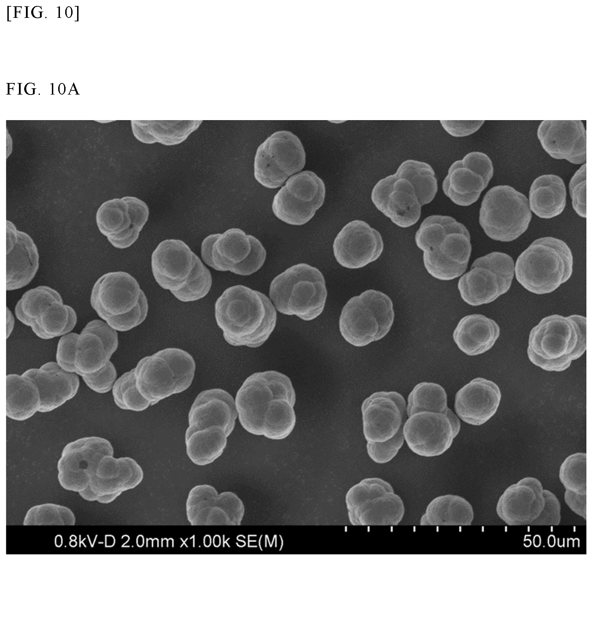

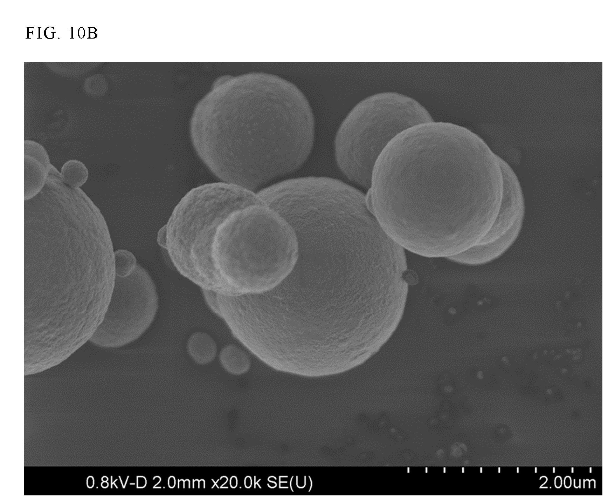

As shown in FIG. 10A, the composite particles of Example 10 had a rounded shape.

For the composite particles of Comparative Example 1 in which non-spherical magnetite was used as the seed particles, the average circularity was 0.69, the particle diameter corresponding to the cumulative value of 50% based on the particle diameter distribution was 5.26 $\mu$m, and the particle diameter corresponding to the cumulative value of 95% based on the particle diameter distribution was 9.46 $\mu$m.

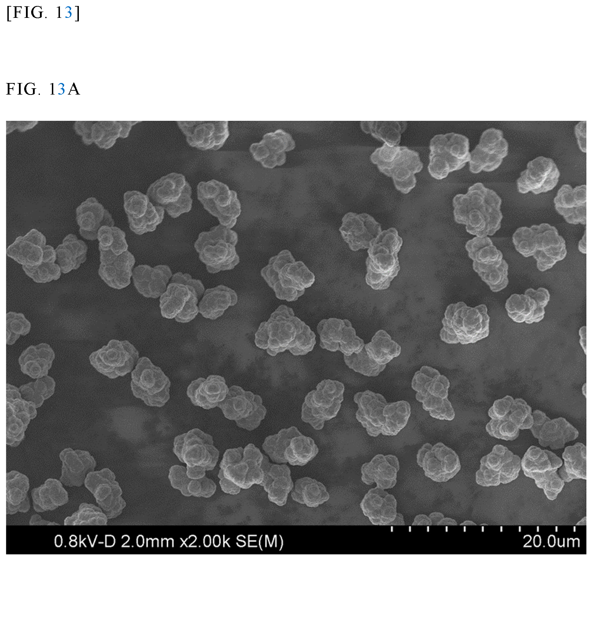

As shown in FIG. 13A, the composite particles of Comparative Example 1 were not rounded, but had a distorted shape.

For the composite particles of Comparative Example 2 in which non-spherical magnetite was used as the seed particles, the average circularity was 0.63, the particle diameter corresponding to the cumulative value of 50% based on the particle diameter distribution was 3.96 $\mu$m, and the particle diameter corresponding to the cumulative value of 95% based on the particle diameter distribution was 6.98 $\mu$m.

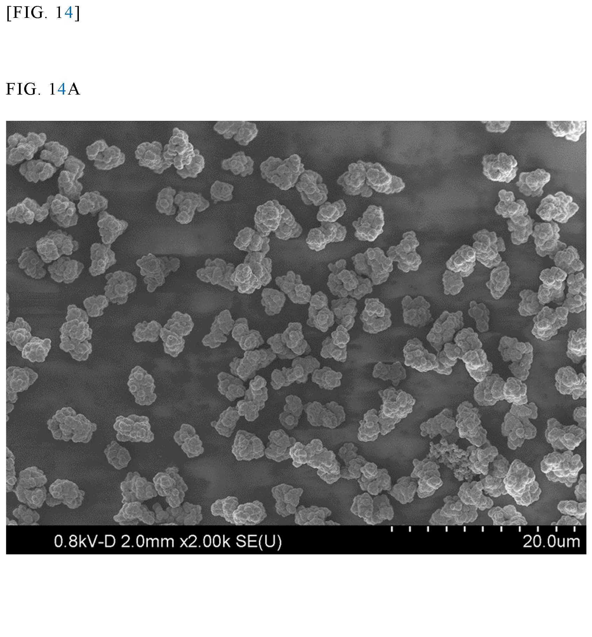

As shown in FIG. 14A, the composite particles of Comparative Example 2 were not rounded, but had a distorted shape.

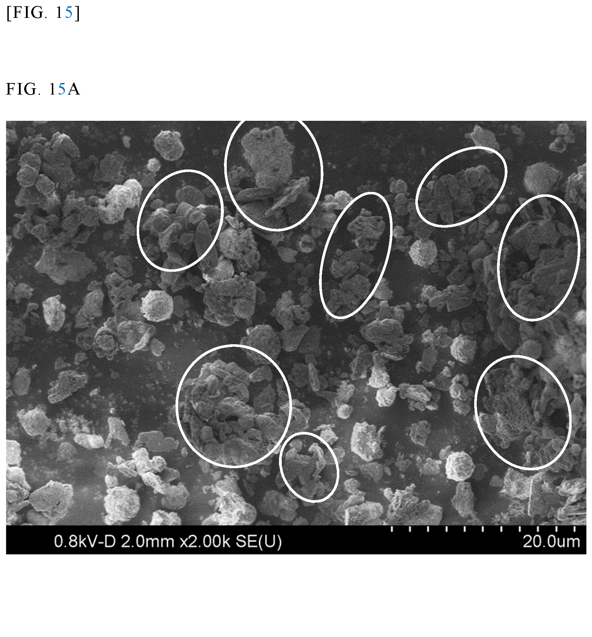

For the composite particles of Comparative Example 3 in which the complexing agent and the oxidant were not added, the average circularity was 0.53, the particle diameter corresponding to the cumulative value of 50% based on the particle diameter distribution was 4.48 $\mu$m, and the particle diameter corresponding to the cumulative value of 95% based on the particle diameter distribution was 19.57 $\mu$m. Furthermore, as shown inside the white frames in FIG. 15A, the reaction product of Comparative Example 3 was contaminated with impurities.

As shown in FIG. 15A, the composite particles of Comparative Example 3 were not rounded, but had a distorted shape.

According to the results in Table 1, it was demonstrated, in all of Examples 1 to 10, that addition of the seed particles to the ferrite precursor stabilized by the complexing agent and the further thermal treatment resulted in formation of the composite particles of seed particles and cobalt ferrite particles, the composite particles having the average circularity within a range of 0.7 to 1.0, the rounded shape, and the specific magnetic properties.

In Example 1, the temperature was 200°C and the maintaining time thereof was 16 hours. On the other hand, in Example 3 in which the thermal treatment was performed at 200°C in the first stage and at 220°C in the second stage, the total maintaining time was 14 hours, and in Example 4 in which the thermal treatment was performed at 200°C in the first stage and at 240°C in the second stage, the total maintaining time was 4 hours and 30 minutes. It was demonstrated that the thermal treatment in two stages resulted in the shortened total duration of the thermal treatment.

The composite particles of Example 5 had the average circularity within a range of 0.7 to 1.0, the rounded shape, and the specific magnetic properties. According to the results of Example 5, it has been confirmed that even when the heating temperature is 190°C, the composite particles of seed particles and cobalt ferrite particles can be obtained, which have the average circularity of 0.7 to 1.0, the rounded shape, and the specific magnetic properties.

The composite particles of Example 6 had the average circularity within a range of 0.7 to 1.0, the rounded shape, and the specific magnetic properties. In Example 6, the particle diameter corresponding to the cumulative value of 50% and the particle diameter corresponding to the cumulative value of 95% based on the particle diameter distribution were respectively 29.73 $\mu$m and 47.31 $\mu$m. Therefore, it has been confirmed that the method for producing composite particles of seed particles and cobalt ferrite particles can yield particles having the particle diameter equal to or less than 30 $\mu$m, and particles having the particle diameter equal to or less than 50 $\mu$m, respectively corresponding to the cumulative values of 50% and 95% based on the particle diameter distribution.

The composite particles of Examples 7 to 9 each had the average circularity within a range of 0.7 to 1.0, the rounded shape, and the specific magnetic properties. According to the results of Example 1 and Examples 6 to 9, it has been confirmed that when iron, iron alloy, iron oxide, spinel ferrite, or silica is used as the seed particles, the composite particles of seed particles and cobalt ferrite particles can be obtained, which have the average circularity of 0.7 to 1.0, the rounded shape, and the specific magnetic properties.

The composite particles of Example 10 had the average circularity within a range of 0.7 to 1.0, the rounded shape, and the specific magnetic properties. According to the results of Example 10, it has been confirmed that despite the use of iron(II) chloride as the divalent iron salt and cobalt(II) chloride as the cobalt salt in the step of preparing the ferrite precursor, the composite particles of seed particles and cobalt ferrite particles can be obtained, which have the average circularity within a range of 0.7 to 1.0, the rounded shape, and the specific magnetic properties.

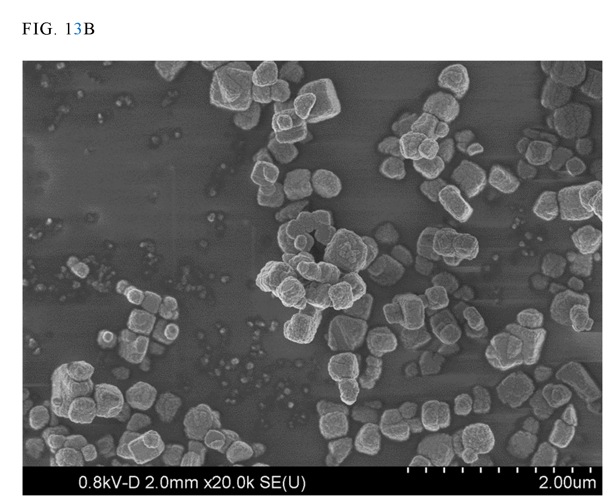

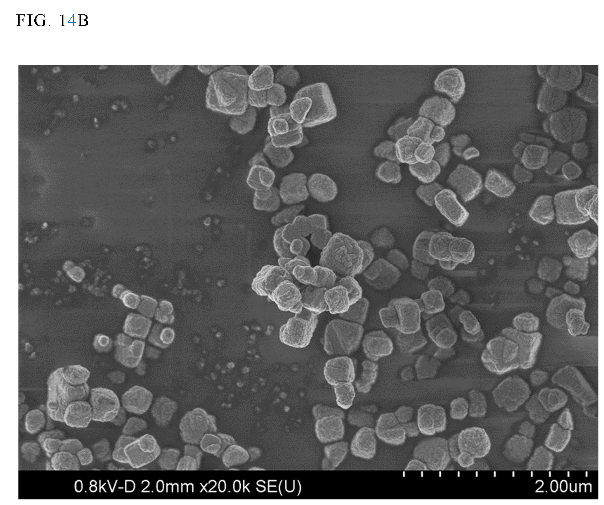

As shown in FIGs. 1B to 10B, iron (Fe), zinc ferrite which is one type of spinel ferrite, alnico which is one type of iron alloy, magnetite which is one type of iron oxide, and silica used as the seed particles in Examples 1 to 10 each had a spherical or approximately spherical shape. On the other hand, as shown in FIGs. 13B and 14B, the shape of the magnetite used as the seed particles in Comparative Examples 1 and 2 was not spherical or approximately spherical.

Comparing Examples 1 to 10 with Comparative Examples 1 and 2, it can be seen that due to the use of the spherical or approximately spherical seed particles, the composite particles of seed particles and cobalt ferrite particles were obtained, which had the average circularity within a range of 0.7 to 1.0, the rounded shape, and the specific magnetic properties.

To confirm cross-sectional structures of the obtained composite particles, transmission electron microscope (TEM) observation was conducted.

FIGs. 16A and 16B show cross-sectional conceptual views of the composite particles of Example 1 as a representative example including the seed particles. It was confirmed that the obtained composite particles were formed in a core-shell type composite particle A as shown in FIG. 16A, or sea-island type composite particles B (B-1 to B-4) including a plurality of seed particles as shown in FIG. 16B, resulting from agglomeration of the composite particles A.

In the present specification, when simply referred to as "particle diameter", it shall refer to a diameter of the outermost shell of the composite particle as indicated by the arrow "a" in FIG. 16A and the arrow "b" in FIG. 16B.

According to the results of Reference Example 1 in Table 1, it has been confirmed that even when no oxidant is added, the composite particles of seed particles and cobalt ferrite particles can be obtained. The reaction rate in Reference Example 1 was 8.6%, which was lower than the reaction rate of 79.9% in Example 1.

Test conditions in Reference Example 1 were the same as in Example 1 except that sodium nitrate ($NaNO_3$) was not used, which was added as the oxidant in (1) Preparation of Raw Material Aqueous Solution in Example 1.

Accordingly, it was found by comparison between Example 1 and Reference Example 1 that addition of the oxidant resulted in significant improvement of the reaction rate.

The composite particles of Reference Example 2 had the average circularity within a range of 0.7 to 1.0, the rounded shape, and the specific magnetic properties. The reaction rate in Reference Example 2 was 63.5%, which was higher than the reaction rate in Reference Example 1.

Test conditions in Reference Example 2 were the same as in Example 1 except that sodium nitrate ($NaNO_3$) was not used, which was added as the oxidant in (1) Preparation of Raw Material Aqueous Solution in Example 1; and in (3) Preparation of Magnetic Particles by Hydrothermal Treatment, the hydrothermal treatment was changed to the two-stage treatment including the first stage at 200°C for 12 hours and the second stage at 220°C for 10 hours.

Comparing Reference Example 1 with Reference Example 2, it has been confirmed that even when no oxidant is added, the thermal treatment in two stages with the increased temperature leads to the improved average circularity and reaction rate of the composite particles, and can yield the composite particles of seed particles and cobalt ferrite particles, which have the average circularity within a range of 0.7 to 1.0, the rounded shape, and the specific magnetic properties.

[Example 11] (Whitening of Cobalt Ferrite Particles)

4.49 g of titanium tetra-i-propoxide titanium solution (27.9 to 28.5% asTi), 14.40 g of ammonia water, and 12.50 g of a hydrogen peroxide solution were mixed with 23.30 g of deionized water to produce a yellow transparent peroxotitanic acid solution. 4.95 g of boric acid anhydride, 5.96 g of potassium chloride, and 1.28 g of sodium hydroxide were dissolved in 267.81 g of deionized water, and 122.50 g of the composite particles of Example 1 was suspended. The peroxotitanic acid solution was added dropwise to and mixed with the suspension under stirring, and the suspended matters were then dried, thereby obtaining titanium oxide-coated powder.

9.08 g of glucose, 1.01 g of tartaric acid, 8.15 g of ethanol, 0.92 g of n-propanol, and 0.47 g of i-propanol were dissolved in 100.38 g of deionized water to prepare a reducing liquid. 5.00 g of sodium hydroxide, 7.00 g of silver nitrate, and 12.00 g of ammonia water were mixed with 360.00 g of deionized water to prepare a silver-ammine complex solution, in which 29.70 g of the titanium oxide-coated powder was suspended. The suspension was mixed with the reducing liquid while ultrasonic irradiation was being performed, and the suspended matters were dried, thereby obtaining silver film-coated powder. The white powder thus obtained had the lightness L* of 79.73.

INDUSTRIAL APPLICABILITY

The composite particles of seed particles and cobalt ferrite particles obtained by the production method of the present invention have a rounded shape and are uniform in particle diameter, and thus are expected to be used as copier toners, magnetic inks, and MR fluids.

**Claims**

1.  A method for producing composite particles of seed particles and cobalt ferrite particles, comprising the steps of:

    preparing a ferrite precursor in an aqueous solution with a divalent iron salt and a cobalt salt stabilized by a complexing agent;
    adding spherical or approximately spherical seed particles to the ferrite precursor; and
    further performing a thermal treatment on the ferrite precursor.

2.  The method for producing composite particles of seed particles and cobalt ferrite particles according to claim 1, wherein the thermal treatment is a hydrothermal treatment performed in a pressure vessel within a temperature range of 130°C to 260°C.

3.  The method for producing composite particles of seed particles and cobalt ferrite particles according to claim 2, wherein the thermal treatment is a hydrothermal treatment performed in a pressure vessel within a temperature range of 190°C to 240°C.

4.  The method for producing composite particles of seed particles and cobalt ferrite particles according to claim 2 or 3, wherein a duration of the step of performing the thermal treatment is 1 to 50 hours.

5.  The method for producing composite particles of seed particles and cobalt ferrite particles according to claim 3, wherein the thermal treatment is a hydrothermal treatment performed by:

    heating to a temperature range of 190°C to 210°C and maintaining a first achieving temperature thereof; and
    further heating to a temperature range of 210°C to 240°C and maintaining a second achieving temperature thereof.

6.  The method for producing composite particles of seed particles and cobalt ferrite particles according to claim 5, wherein the first achieving temperature is maintained for 1 to 14 hours.

7.  The method for producing composite particles of seed particles and cobalt ferrite particles according to claim 5 or 6, wherein the second achieving temperature is maintained for 0.5 to 12 hours.

8.  The method for producing composite particles of seed particles and cobalt ferrite particles according to claim 2 or 3, wherein, as the seed particles, at least one selected from iron, iron alloy, iron oxide, spinel ferrite, or silica is used.

9.  The method for producing composite particles of seed particles and cobalt ferrite particles according to claim 2 or 3, wherein the divalent iron salt and the cobalt salt are respectively iron(II) sulfate and cobalt(II) sulfate.

10. The method for producing composite particles of seed particles and cobalt ferrite particles according to claim 2 or 3, wherein the divalent iron salt and the cobalt salt are respectively iron(II) chloride and cobalt(II) chloride.

11. The method for producing composite particles of seed particles and cobalt ferrite particles according to claim 2 or 3, wherein, as the complexing agent, one selected from citrate, nitrilotriacetate, or malate is used.

12. The method for producing composite particles of seed particles and cobalt ferrite particles according to claim 2 or 3, wherein the step of performing the thermal treatment is carried out in the presence of an oxidant in addition to the complexing agent.

13. The method for producing composite particles of seed particles and cobalt ferrite particles according to claim 12, wherein the oxidant is nitrate.

14. The method for producing composite particles of seed particles and cobalt ferrite particles according to claim 2 or 3, wherein a trivalent iron salt is further added to the aqueous solution comprising the ferrite precursor.

15. The method for producing composite particles of seed particles and cobalt ferrite particles according to claim 2 or 3, wherein a pH buffer is further added to the aqueous solution comprising the ferrite precursor.

16. The method for producing composite particles of seed particles and cobalt ferrite particles according to claim 2 or 3, wherein an alkaline aqueous solution or the ferrite precursor is press-injected into the pressure vessel in the middle or after completion of the step of performing the thermal treatment, and the thermal treatment is further performed.

17. Composite particles of seed particles and cobalt ferrite particles, wherein

the composite particles have a rounded shape with an average circularity of 0.7 to 1.0,
a particle diameter corresponding to a cumulative value of 50% based on a particle diameter distribution is 1 to 30 µm, and
a particle diameter corresponding to a cumulative value of 95% based on a particle diameter distribution is 5 to 50 µm.

18. The composite particles of seed particles and cobalt ferrite particles according to claim 17, wherein a residual magnetic moment is equal to or more than 10 emu/g and a coercivity is 100 to 1000 Oe.

19. A copier toner comprising the composite particles of seed particles and cobalt ferrite particles according to claim 18.

20. A magnetic ink comprising the composite particles of seed particles and cobalt ferrite particles according to claim 18.

21. An MR fluid comprising the composite particles of seed particles and cobalt ferrite particles according to claim 18.

22. White powder comprising a titanium oxide film and a metallic silver film in this order on surfaces of the composite particles of seed particles and cobalt ferrite particles according to claim 18.

23. The white powder according to claim 22, wherein a lightness L* is equal to or higher than 75.

[FIG. 1]

FIG. 1A

0.8kV-D 2.0mm x2.00k SE(U)     20.0um

FIG. 1B

[FIG. 2]

FIG. 2A

FIG. 2B

[FIG. 3]

FIG. 3A

0.8kV-D 2.0mm x2.00k SE(U)　　　　　　20.0um

FIG. 3B

0.8kV-D 2.0mm x20.0k SE(U)                    2.00um

[FIG. 4]

FIG. 4A

0.8kV-D 2.0mm x2.00k SE(U)                    20.0um

FIG. 4B

0.8kV-D 2.0mm x20.0k SE(U)                    2.00um

[FIG. 5]

FIG. 5A

FIG. 5 B

[FIG. 6]

FIG. 6A

0.8kV-D 2.0mm x300 SE(M)          100um

FIG. 6B

[FIG. 7]

FIG. 7A

FIG. 7B

[FIG. 8]

FIG. 8A

FIG. 8B

[FIG. 9]

FIG. 9A

0.8kV-D 2.0mm x2.00k SE(U)    20.0um

FIG. 9B

[FIG. 10]

FIG. 10A

0.8kV-D 2.0mm x1.00k SE(M)    50.0um

FIG. 10B

0.8kV-D 2.0mm x20.0k SE(U)          2.00um

[FIG.11]

FIG. 11A

0.8kV-D 2.0mm x2.00k SE(U)                    20.0um

FIG. 11B

0.8kV-D 2.0mm x20.0k SE(U)　　　2.00um

[FIG. 12]

FIG. 12A

0.8kV-D 2.0mm x2.00k SE(U) 20.0um

FIG. 12B

0.8kV-D 2.0mm x20.0k SE(U)            2.00um

[FIG. 13]

FIG. 13A

FIG. 13B

0.8kV-D 2.0mm x20.0k SE(U)          2.00um

[FIG. 14]

FIG. 14A

FIG. 14B

0.8kV-D 2.0mm x20.0k SE(U)                    2.00um

[FIG. 15]

FIG. 15A

0.8kV-D 2.0mm x2.00k SE(U)      20.0um

FIG. 15B

[FIG. 16]

FIG. 16A

FIG. 16B

## INTERNATIONAL SEARCH REPORT

| International application No. |
| --- |
| **PCT/JP2024/032669** |

### A. CLASSIFICATION OF SUBJECT MATTER

*H01F 1/11*(2006.01)i; *C01B 33/12*(2006.01)i; *C01G 49/00*(2006.01)i; *C01G 49/08*(2006.01)i; *C09C 1/24*(2006.01)i; *G03G 9/08*(2006.01)i; *G03G 9/083*(2006.01)i; *G03G 9/107*(2006.01)i
FI: H01F1/11; C01B33/12 Z; C01G49/00 E; C01G49/08 A; C09C1/24; G03G9/08 381; G03G9/083 301; G03G9/107 321

According to International Patent Classification (IPC) or to both national classification and IPC

### B. FIELDS SEARCHED

Minimum documentation searched (classification system followed by classification symbols)

H01F1/11; C01B33/12; C01G49/00; C01G49/08; C01G51/00; C09C1/24; G03G9/08; G03G9/083; G03G9/107

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2020-193140 A (NITTETSU MINING CO., LTD.) 03 December 2020 (2020-12-03) claims, paragraphs [0012]-[0024], [0028]-[0037], fig. 1-4 | 1-23 |
| Y | JP 6-231957 A (NIPPON PAINT CO., LTD.) 19 August 1994 (1994-08-19) paragraphs [0014]-[0021] | 1-23 |
| Y | JP 63-65085 A (NIPPON PAINT CO., LTD.) 23 March 1988 (1988-03-23) p. 1, lower right column, lines 11-13, p. 2, lower left column, line 3 to p. 4, upper left column, line 18 | 1-23 |
| Y | JP 63-10095 B2 (UBE INDUSTRIES, LTD.) 03 March 1988 (1988-03-03) column 2, lines 12-21, column 4, lines 3-28 | 5-7 |
| A | JP 2020-180038 A (NITTETSU MINING CO., LTD.) 05 November 2020 (2020-11-05) paragraphs [0012]-[0022] | 1-23 |

☑ Further documents are listed in the continuation of Box C.     ☑ See patent family annex.

| * | Special categories of cited documents: |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **20 November 2024** | **03 December 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

| International application No. |
|---|
| **PCT/JP2024/032669** |

| C. | DOCUMENTS CONSIDERED TO BE RELEVANT | | |
|---|---|---|
| Category* | Citation of document, with indication, where appropriate, of the relevant passages | Relevant to claim No. |
| P, X | JP 2023-138411 A (NITTETSU MINING CO., LTD.) 02 October 2023 (2023-10-02)<br>claims, paragraphs [0012]-[0025], [0030]-[0050], fig. 1-9, 13 | 1-4, 8-23 |

Form PCT/ISA/210 (second sheet) (July 2022)

INTERNATIONAL SEARCH REPORT
Information on patent family members

International application No.

**PCT/JP2024/032669**

| Patent document cited in search report | | | Publication date (day/month/year) | Patent family member(s) | | | Publication date (day/month/year) |
|---|---|---|---|---|---|---|---|
| JP | 2020-193140 | A | 03 December 2020 | US | 2022/0234910 | A1 | |
| | | | | claims, paragraphs [0023]-[0055], [0059]-[0078], fig. 1-4 | | | |
| | | | | WO | 2020/241065 | A1 | |
| | | | | EP | 3978443 | A1 | |
| | | | | CN | 113853356 | A | |
| | | | | KR | 10-2022-0012350 | A | |
| JP | 6-231957 | A | 19 August 1994 | US | 5736349 | A | |
| | | | | column 2, lines 33-60, column 4, line 52 to column 5, line 51 | | | |
| | | | | EP | 585868 | A2 | |
| | | | | DE | 585868 | T1 | |
| | | | | ES | 2052465 | T1 | |
| JP | 63-65085 | A | 23 March 1988 | US | 4911957 | A | |
| | | | | column 1, lines 11-14. column 2, line 25 to column 4, line 56 | | | |
| | | | | EP | 259194 | A2 | |
| | | | | CA | 1306901 | C | |
| JP | 63-10095 | B2 | 03 March 1988 | (Family: none) | | | |
| JP | 2020-180038 | A | 05 November 2020 | US | 2022/0194813 | A1 | |
| | | | | paragraphs [0022]-[0050] | | | |
| | | | | WO | 2020/217982 | A1 | |
| | | | | EP | 3960706 | A1 | |
| | | | | CN | 113677626 | A | |
| | | | | KR | 10-2022-0002285 | A | |
| JP | 2023-138411 | A | 02 October 2023 | WO | 2023/176926 | A1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4138344 B
- JP H0324412 B
- JP 60047722 B
- JP 5504399 B
- JP H05275224 A
- JP 4113045 B
- WO 9628269 A
- JP H11131102 A